# EUROPEAN PATENT SPECIFICATION

(11) **EP 1 169 833 B1**
(45) Date of publication and mention of the grant of the patent: **14.12.2005**
(21) Application number: 00921875.1
(22) Date of filing: 07.04.2000
(51) Int. Cl.: H04L 29/06, H04M 7/00

(54) **KEY MANAGEMENT BETWEEN A CABLE TELEPHONY ADAPTER AND ASSOCIATED SIGNALING CONTROLLER**
SCHLÜSSELVERWALTUNG ZWISCHEN KABELTELEFONSYSTEMADAPTER UND SIGNALEINRICHTUNGKONTROLLE
GESTION DES CLES ENTRE UN ADAPTATEUR DE TELEPHONIE PAR CABLE ET UN SIGNALEUR ASSOCIE

(30) Priority: 09.04.1999 US 128772 P
(43) Date of publication of application: 09.01.2002
(73) Proprietor: GENERAL INSTRUMENT CORPORATION, Horsham, Pennsylvania 19044 (US)
(72) Inventor: MEDVINSKY, Sasha, San Diego, CA 92129 (US)
(74) Representative: Bohnenberger, Johannes
(86) International application number: PCT/US2000/009323
(87) International publication number: WO 2000/062507

(56) References cited:
- WO-A-97/47118
- WO-A-98/36522
- US-A- 5 602 918
- US-A- 5 867 495

## Description

### FIELD OF THE INVENTION

This invention relates generally to key management for Client-Server systems, and more particularly, to a scalable key management system for use in IP telephony networks.

### BACKGROUND OF THE INVENTION

In an Internet Protocol (IP) telephony network, a network server may be responsible for setting up phone calls with up to 100,000 clients. The clients may be coupled to the telephony network via cable telephony adapter (CTA) devices. In order to secure call signaling, an Internet Protocol Security (IPSec) association is set up between each client and the server. This has to be done in a timely fashion to minimize the CPU overhead at the server and to minimize the call setup delay.

In order to handle large numbers of clients, key management needs to be as fast as possible. For example, security associations might be lost when a server goes down or become too busy to handle all of its clients. The lost security associations must then be re-establish again when needed. Manual administration of clients is unsuitable because of the high overhead costs and lack of scalability. Other techniques used in architectures unrelated to IP telephony are also not suitable, since they do not provide the desired scalability and low administration overhead.

US 5 867 495 is directed at a system for telephone calls, data, and other multi-media information being routed through a hybrid network which includes transfer of information across the internet using telephony routing information and internet protocol address information. A media order entry captures complete user profile information for a user. This profile information is used by the system throughout the media experience for routing, billing, monitoring, reporting and other media control functions. Users can manage more aspects of a network than previously possible and control network activities from a central site. Calling card access is provided for users and supports typical calls as well as media transfers over the hybrid network.

WO98/36522 is directed at a method and apparatus for enhancing security of a message sent through a network server from a client computer to a destination server. A secure connection for receiving and transmitting data is established between the client computer and the network server. Client identifying information and secure authentication information from a validation center are used. Network server may use the client authenticating information to obtain permission from the validation center for purposes of accessing the destination server.

Neither of the above documents, however, discusses a system which provides a simple and readily scaleable key management system obviating the need for a central storage point for a large number of security associations. Further, there is no ability in the above documents to re-key quickly after a loss of association with a server, or when a client switches to a different server.

### SUMMARY OF THE INVENTION

The present invention includes a highly scalable key management architecture for secure client-server systems used in IP telephony network, wherein cryptographic state needs to be saved only by the clients. This architecture takes advantage of existing key management protocols, Kerberos with the PKINIT (public key) extension, to provide an IP telephony system having a high degree of scalability. In the case of lost security associations, the architecture provides for lightweight rekeying operations that allow clients to quickly re-establish the lost association or switch to a different server.

In one embodiment of the present invention, a method for establishing a secure channel between an IP telephony endpoint and Server in an IP telephony network is provided. The endpoint is coupled to a user and the Server is coupled to the IP telephony network. The method comprises steps of transmitting from the endpoint to a key distribution center a request for a security ticket, receiving the security ticket from the key distribution center, transmitting from the endpoint to the Server a request for a sub-key, receiving the sub-key from the Server, and establishing a secure channel between the endpoint and the Server using the sub-key.

A further understanding of the nature and the advantages of the inventions disclosed herein may be realized by reference to the remaining portions of the specification and the attached drawings.

### BRIEF DESCRIPTION OF THE DRAWINGS

FIG. 1 shows a telephony network constructed in accordance with the present invention;
FIG. 2 shows message exchange diagram for establishing a secure communication channel in accordance with the present invention; and
FIG. 3 shows a method for establishing a secure communication channel using the messages of FIG. 3.

### DESCRIPTION OF THE SPECIFIC EMBODIMENTS

Embodiments of the present invention provide for establishing a secure channel between an IP telephony endpoint and a Server in an IP telephony network. In the embodiments discussed herein, a cable telephony adapter (CTA) device is representative of the IP telephony endpoint and a Signaling Controller (SC) is representative of the Server. However, the present invention is suitable for use with other types of network endpoints and Servers not discussed herein.

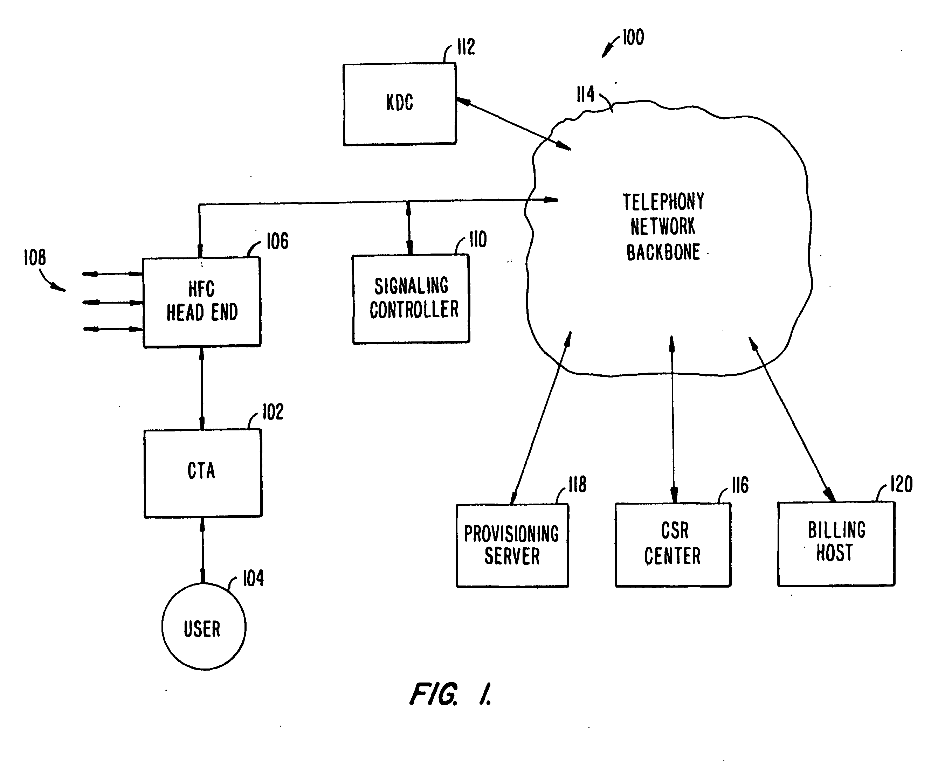

FIG. 1 shows a portion of a telephony network 100 constructed in accordance with the present invention. To access the telephony network, CTA 102 provides access to a user 104 via a Hybrid Fiber/Coax (HFC) head-end 106. The HFC head-end 106 has the capacity to provide access to other users as shown at 108. The HFC head-end is also coupled to a Signaling Controller (SC) 110 which is coupled to a telephony network backbone 114. The Signaling Controller is used to control the CTA's access to the telephony network. A key distribution center (KDC) 112, is also coupled to the telephony network backbone 114. The KDC 112 issues Kerberos tickets, which are in turn used to generate sub-keys for secure connection protocols, such as the IPSec encapsulating security payload (ESP) protocol, or other secure connections. The network 100 also includes a customer service representative (CSR) center 116, a provisioning certification authority (CA) 118 and a billing host 120. Thus, in the network 100 it is possible for the user 104 to access the telephony backbone 114 via the CTA 102 using a secure protocol.

Embodiments of the present invention include the use of the Kerberos protocol with the public key PKINIT extension for key management. This protocol is based on Kerberos tickets, which are cookies, encrypted with the particular server's key. The Kerberos ticket is used to both authenticate a client to a server and to establish a session key, which is contained in the ticket. Accessing Kerberos services can be done using the Generic Security Service Application Program Interface (GSS-API) standard.

In one embodiment of the present invention, two-way authentication with public key certificates is used by the CTA to obtain a security ticket in the form of a Signaling Controller ticket from the KDC. A corresponding session key is delivered to the CTA sealed with either the CTA's public key or with a secret derived from a Diffie-Hellman exchange. The Signaling Controller ticket is kept for a relatively long period of time, for example, days or weeks. The length of this period can be adjusted based on network performance requirements. In addition, the Signaling Controller ticket is used to establish a symmetric session key, which is in turn used to establish a set of keys for use with the IPSec ESP mode. The keys used by IPSec are not derived from the session key itself. Instead, another random key (i.e., a sub-key) is generated for each phone call and then used to derive the IPSec keys. Thus, the Signaling Controller does not have to keep state. After it derives all the required keys from the sub-key and exchanges signaling messages with the CTA, the Signaling Controller can throw away the ticket along with all of the associated keys.

The use of the Kerberos protocol with the PKINIT extension in embodiments of the present invention provides several advantages. For example, the Signaling Controller is not required to keep state - Kerberos tickets need to be kept only by the endpoints (CTAs). Also, IPSec Security Associations can be torn down when no longer needed and quickly re-established with efficient key management based on the Kerberos tickets. The protocol runs over both TCP and UDP protocols, and is a widely available standard, with multiple vendors providing support for both Kerberos and PKINIT.

In one embodiment, within the PKINIT protocol, RSA is used for both key delivery and authentication. In another embodiment, a PKINIT option may be used wherein Diffie-Hellman is used for the key exchange and RSA is used for authentication. In general, embodiments of the present invention are suitable for use with any public key algorithms within PKINIT for both authentication and key exchanges.

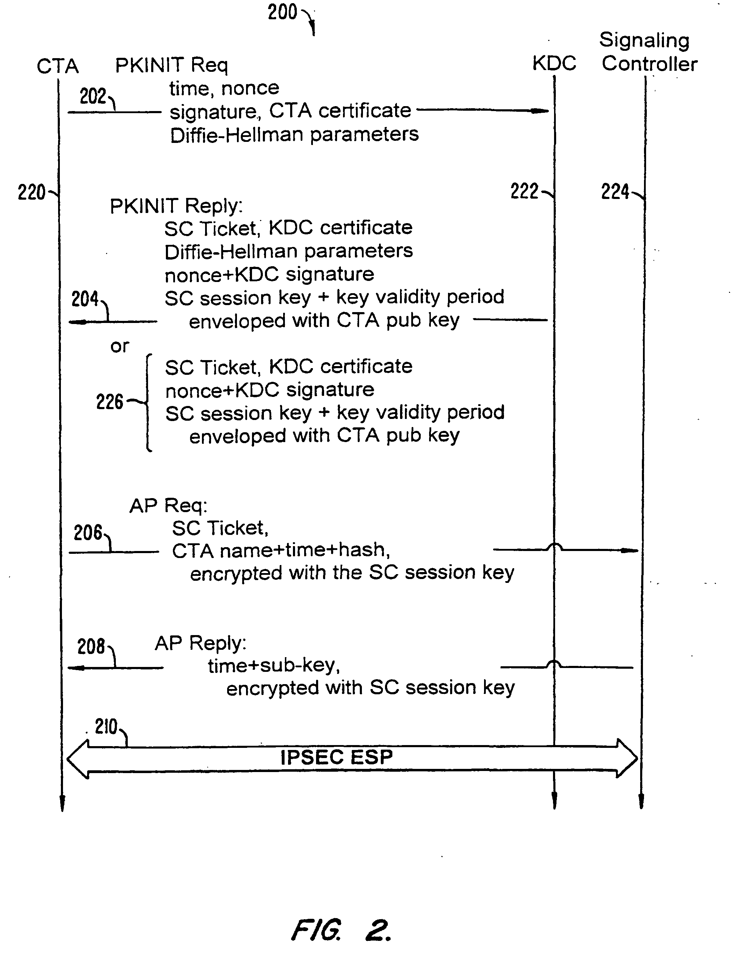

FIG. 2 shows a message exchange diagram 200 illustrating how the CTA uses Kerberos to obtain the sub-key, which in turn, is used to derive IPSec ESP keys for the CTA-to-Signaling Controller signaling messages. In the exchange diagram 200, only some of the information carried in the messages is provided in order to present a clear description of the protocol. The exchange diagram 200 shows messages transmitted or received at the CTA 102 at line 220, the KDC 112 at line 222, and the Signaling Controller 110 at line 224.

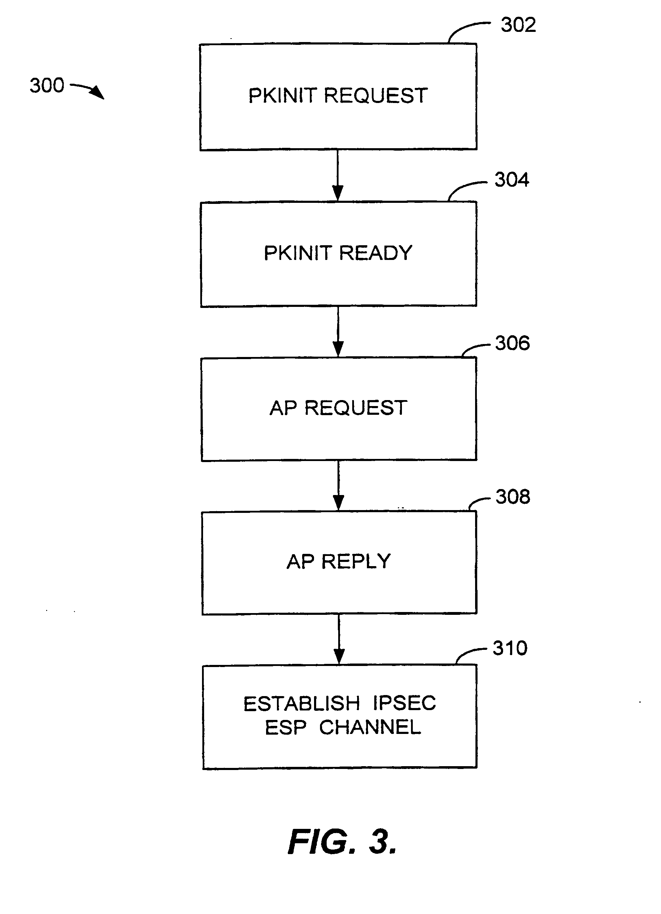

FIG. 3 shows a flow diagram 300 illustrating how the messages of FIG. 2 are exchanged in accordance with the present invention.
At block 302, a PKINIT Request requesting a security ticket, which could be of the form of the Kerberos ticket detailed above is sent from the CTA 102 to the KDC 112 as shown by message 202. This request includes the CTA signature and certificate - used by the KDC to authenticate the CTA. This request also carried the current time used by the KDC to verify that this message is not a replay or a retransmission of an old message. The PKINIT Request also contains a random value (called a nonce) that will be used to bind a subsequent PKINIT Reply message to this request. In the case that a Diffie-Hellman exchange is used, the CTA will also include its Diffie-Hellman parameters and public value in the PKINIT Request.
At block 304, the KDC 112 receives and verifies the PKINTT Request and then issues to the CTA a security ticket for the Signaling Controller (hereinafter referred to as a Signalling Controller ticket, or a SC ticket) encrypted with the Signaling Controller's service key. Inside this encrypted security ticket are a symmetric session key, its validity period and the CTA identity. Also in this step, the security ticket will be sent back to the CTA 102 inside a PKINIT Reply, shown by message 204. The PKINIT Reply message also contains KDC's certificate and signature for authenticating the KDC, along with the nonce from the PKINIT Request to protect against replays. If a Diffie-Hellman exchange is used, the KDC also places its Diffie-Hellman public value into this message.
The PKINIT Reply also contains a second copy of the session key and its validity period found in the security ticket - intended to be decrypted and used by the CTA: This second copy of the session key and its associated attributes are either encrypted with a Diffie-Hellman-derived secret or enveloped with the CTA's public key. Here, enveloped means that the session key along with its associated attributes are not encrypted directly with the CTA's public key. Within the PKINIT Reply the public key is used to encrypt a random symmetric key that is in turn used to encrypt another symmetric key which is then finally used to encrypt the session key and its attributes. This embodiment uses the PKINIT standard as is, even though in this case, simplifications to the PKINIT Reply seem possible. If a Diffie-Hellman exchange is not used, then the Reply contains message items as shown at 226.

At block 306, an application (AP) Request requesting a sub-key is sent from the CTA 102 to the Signaling Controller 110 as shown by message 206. Here, a CTA has already obtained a Signaling Controller ticket and now initiates key management with the Signaling Controller by sending it an AP Request message. The AP Request contains the Signaling Controller ticket along with the CTA name, timestamp and a message hash - all encrypted with the SC session key. The timestamp is used to check for replays of old AP Request messages.

At block 308. the Signaling Controller 110 receives an AP Request. It first decrypts and validates the security ticket with its service key. It then takes the session key out of the ticket and uses it to decrypt and validate the rest of the AP Request. Then, the Signaling Controller generates a random sub-key and encrypts it along with the current timestamp with the session key. It places this information into an AP Reply message 208 and sends it back to the CTA.

At block 310, the CTA receives and validates the AP Reply, after which it shares the sub-key with the Signaling Controller. Both sides independently derive (with some one-way function) a set of IPSec encryption and authentication keys from this sub-key. After that, all signaling messages between the CTA and the Signaling Controller will be protected with an IPSec channel. This establishment of the IPSec channel is symbolically illustrated in FIG. 2 at 210 - even though this step does not involve an exchange of messages.

In the embodiment of the invention depicted in FIGS. 2 and 3, the PKINIT exchange is performed at long intervals in order to obtain an intermediate symmetric session key. This session key is shared between the CTA and the Signaling Controller (via the Signaling Controller Ticket).

In this embodiment, the PKINIT Request/Reply messages, shown at 202 and 204, are sent over a TCP/IP connection. This is because a single PKINIT Request or Reply message, containing public key and Diffie-Hellman information may be too large to fit into a single UDP packet. The use of TCP instead of UDP may have some impact on performance, but since the PKINIT exchange occurs at infrequent intervals (days or weeks apart) and is not tied to the phone calls, the impact on performance is not significant.

The session key is used in the AP Request and AP Reply messages, shown at 206, 208 and are exchanged for each phone call, to establish a symmetric sub-key. This sub-key is used to derive all of the IPSec ESP keys and starting sequence numbers, used for both directions. The AP Request and AP Reply messages are small enough to fit into a single UDP packet, and thus will run over UDP.

The present invention provides a highly scalable key management architecture for secure client-server systems used in IP telephony networks. It will be apparent to those with skill in the art that modifications to the above methods and embodiments can occur without deviating from the scope of the present invention. Accordingly, the disclosures and descriptions herein are intended to be illustrative, but not limiting, of the scope of the invention which is set forth in the following claims.

## Claims

1. A method for establishing a secure channel between an IP telephony endpoint (102, 220) and Server (110, 224) in an IP telephony network (100), wherein the endpoint (102, 220) is coupled to a user (104) and the Server (110, 224) is coupled to the IP telephony network (100), the method **characterized by** the steps of:
transmitting from the endpoint (102, 220) to a key distribution center (112, 222) a request for a security ticket (202);
receiving the security ticket from the key distribution center (112, 222) (204);
transmitting from the endpoint (102, 220) to the Server (110, 224) the security ticket along with a request for a sub-key which is encrypted using a session key (206);
validating the security ticket at the Server (110, 224), using the session key to decrypt the sub-key request, and generating a sub-key which is encrypted with the session key and sent to the endpoint (102, 220) (308);
receiving the sub-key from the Server (110, 224) (208); and
establishing a secure channel between the endpoint (102, 220) and the Server (110, 224) using the sub-key (310).

2. The method of claim 1, wherein the endpoint (102, 220) is a cable telephone adapter (102).

3. The method of claim 1, wherein the server (110, 224) is a Signaling Controller (110).

4. The method of claim 1, wherein the secure channel is an IPSec channel.

## Patentansprüche

1. Ein Verfahren zum Einrichten eines sicheren Kanals zwischen einem IP-Telefonie-Endpunkt (102, 220) und einem Server (110, 224) in einem IP-Telefonie-Netz (100), wobei der Endpunkt (102, 220) an einen Verbraucher (104) gekoppelt ist und der Server (110, 224) an das IP-Telefonie-Netz (100) gekoppelt ist, wobei das Verfahren durch die folgenden Schritte **gekennzeichnet** ist:
Übertragen einer Anforderung eines Sicherheitstickets von dem. Endpunkt (102, 220) an ein Schlüsseiverteilungszentrum (112, 222) (202);
Empfangen des Sicherheitstickets von dem Schlüsselverteilungszentrum (112, 222) (204);
Übertragen des Sicherheitstickets zusammen mit einer Anforderung eines Unterschlüssels, der unter Verwendung eines Sitzungsschlüssels verschlüsselt ist, vom Endpunkt (102, 220) zum Server (110, 224) (206);
Validieren des Sicherheitstickets an dem Server (110, 224) unter Verwendung des Sitzungsschlüssels, um die Unterschlüsselanforderung zu entschlüsseln, und Erzeugen eines Unterschlüssels, der mit dem Sitzungsschlüssel verschlüsselt und an den Endpunkt (102, 220) gesendet wird (308);
Empfangen des Unterschlüssels von dem Server (110, 224) (208); und
Einrichten eines sicheren Kanals zwischen dem Endpunkt (102, 220) und dem Server (110, 224) unter Verwendung des Unterschlüssels (310).

2. Verfahren gemäß Anspruch 1, wobei der Endpunkt (102, 220) ein Kabeltelefonadapter (102) ist.

3. Verfahren gemäß Anspruch 1, wobei der Server (110, 224) eine Signalisierungssteuereinheit (110) ist.

4. Verfahren gemäß Anspruch 1, wobei der sichere Kanal ein IPSec-Kanal ist.

## Revendications

1. Une méthode destinée à établir un canal sécurisé entre un point limite de téléphonie IP (102, 220) et un serveur (110, 224) dans un réseau de téléphonie IP (100), dans laquelle le point limite (102, 220) est couplé à un utilisateur (104) et le serveur (110, 224) est couplé au réseau de téléphonie IP (100), la méthode étant **caractérisée par** les étapes de :
transmettre une demande de billet de sécurité (202) du point limite (102, 220) à un centre de distribution de clés (112, 222) ;
recevoir le billet de sécurité du centre de distribution de clés (112, 222) (204) ;
transmettre le billet de sécurité ainsi qu'une demande de sous-clé qui est cryptée en utilisant une clé de session (206) du point limite (102, 220) au serveur (110, 224) ;
valider le billet de sécurité au niveau du serveur (110, 224), en utilisant la clé de session pour décrypter la demande de sous-clé, et générer une sous-clé qui est cryptée avec la clé de session et envoyée au point limite (102, 220) (308) ;
recevoir la sous-clé du serveur (110, 224) (208) ; et
établir un canal sécurisé entre le point limite (102, 220) et le serveur (110, 224) en utilisant la sous-clé (310).

2. La méthode de la revendication 1, dans laquelle le point limite (102, 220) est un adaptateur de téléphone par câble (102).

3. La méthode de la revendication 1, dans laquelle le serveur (110, 224) est un contrôleur de signalisation (110).

4. La méthode de la revendication 1, dans laquelle le canal sécurisé est un canal IPSec.
